Europäisches Patentamt

European Patent Office

Office européen des brevets

(19)

(11) **EP 1 139 283 A1**

(12) ## DEMANDE DE BREVET EUROPEEN

(43) Date de publication:
**04.10.2001 Bulletin 2001/40**

(51) Int Cl.[7]: **G06T 5/00**

(21) Numéro de dépôt: **00400879.3**

(22) Date de dépôt: **30.03.2000**

(84) Etats contractants désignés:
**AT BE CH CY DE DK ES FI FR GB GR IE IT LI LU MC NL PT SE**
Etats d'extension désignés:
**AL LT LV MK RO SI**

(71) Demandeur: **Arts Video Interactive**
**78300 Poissy (FR)**

(72) Inventeur: **Saupique, Stéphane**
**78410 Aubergenville (FR)**

(74) Mandataire: **Thibon-Littaye, Annick**
**Cabinet A. THIBON-LITTAYE**
**11 rue de l'Etang**
**78160 Marly-le-Roi (FR)**

(54) **Procédé et système de traitement d'une image numérique, pour en extraire des objets numériques**

(57)    Le procédé selon l'invention comprend une phase de localisation d'objets numériques se décomposant en quatre étapes successives, la segmentation de l'image en régions homogènes ($R_p(S)$), l'étiquetage de ces régions homogènes suivant trois états : *"Non Etiqueté", "Non Significatif",* et *"Significatif",* la fusion des régions voisines en zones ($Z_1$-$Z_4$) associées à l'état *Si-gnificatif,* et la détermination de boites ($B_1$-$B_4$) englobant les zones ($Z_1$-$Z_4$), et une phase consistant en l'extraction proprement dite des objets comprenant trois étapes successives : l'acquisition d'un jeu de vecteurs d'interception, la construction d'un contour de l'objet, dit primaire, à partir de ces vecteurs, et la reconstruction du contour réel de l'objet, par lissage et élimination de bruits numériques.

FIG.1H

Régions non significatives

Régions fusionnées significatives

EP 1 139 283 A1

**Description**

La présente invention concerne un procédé de localisation et/ou d'extraction automatique d'un ou plusieurs objets numériques dans une image également numérique.

Elle concerne également un système pour la mise en oeuvre de ce procédé.

Dans le cadre de la présente invention, le terme "objet" doit être entendu dans un sens général. Il s'agit d'une région d'une image numérique, homogène selon certains critères prédéterminés qui seront précisés ci-après, pouvant se distinguer des autres régions et/ou du fond (arrière-plan) de cette image numérique, que ce fond soit homogène ou non, comme il le sera montré. A titre d'exemple non exhaustif, un "objet" peut être constitué par un objet, dans le sens usuel du terme, mais aussi par un personnage, ou de façon plus générale par tout contour fermé définissant une zone de l'image de caractéristiques particulières.

L'opération d'extraction est souvent appelée "détourage" dans les procédés de traitement d'image.

Les procédés les plus rudimentaires consistent en effet à déterminer de façon entièrement manuelle le contour d'un objet que l'on désire extraire d'une image. Pour ce faire, les logiciels permettant un traitement d'image, possèdent diverses fonctions, par exemple la fonction dite de "lasso" qui permet de tracer autour de l'objet à l'aide d'un dispositif de pointage (par exemple une "souris") un contour s'approchant du contour de l'objet à "détourer". On peut ensuite sélectionner la zone entourée, ou son complément logique, et opérer un découpage (fonction "ciseau") et "coller" l'image ainsi sur un fond homogène. On peut également effacer les zones entourant l'objet à l'aide d'une fonction dite "gomme", c'est-à-dire en réalité appliquer également une couleur uniforme sur ces zones. Les deux méthodes sont combinables : un détourage "grossier" peut être obtenu par la sélection d'une zone entourant l'objet à détourer, suivi d'un effacement sélectif des zones parasites restantes, avantageusement en grossissant l'image (fonction "zoom"). L'objet ainsi détouré peut ensuite être utilisé à diverses fins, notamment en vue d'une superposition sur un fond différent du fond d'origine, voire une nouvelle image (trucage, etc.). Il suffit alors de colorer le nouveau fond dans une couleur non présente dans l'objet détouré et d'associer à ce fond un attribut dit de "couleur transparente". On peut alors superposer la nouvelle image (objet + fond dit "transparent") avec n'importe quel autre fond. Cette technique est celle bien connue de "l'arrière plan bleu", utilisée couramment en vidéo.

Il existe d'autres techniques plus sophistiquées permettant d'extraire les contours d'un objet dans une image. on peut évoquer, par exemple, le procédé bien connu sous le vocable général de "baguette magique".

Cependant toutes ces techniques sont de type manuel et exige donc un temps très important pour obtenir le résultat voulu. D'autre part, elles dépendent de la dextérité de l'opérateur pour obtenir un résultat convenable, sinon parfait. Enfin, elles ne permettent généralement que l'extraction d'un seul objet à la fois.

Aussi, il a été proposé des procédés plus performants, et partiellement automatisés, mettant en oeuvre des techniques dites de "contours actifs ou flexibles". Ces techniques sont basées elles-mêmes sur le concept dit de "serpent", ou "snake" selon la terminologie anglo-saxonne.

Les "serpents" sont des contours définis manuellement par un opérateur, via une interface "homme-machine". Ils peuvent ensuite s'auto-adapter afin de représenter plus fidèlement les contours réels d'un objet que l'on désire détourer, mais ils nécessitent l'étape initiale de détourage manuel, que l'on peut appeler "grossier".

D'un point de vue mathématique, un "serpent" peut être associé à une fonction, dite "spline", de minimisation d'énergie. En effet, un "serpent" étant défini comme une fonction d'énergie, il s'agit de minimiser cette fonction, afin de trouver la meilleure adaptation entre le "serpent" et le contour réel de l'objet à détourer. Les "serpents" possèdent la propriété de modifier dynamiquement, et leur forme, et leur position, pendant la recherche d'un état d'énergie minimal.

A titre d'exemple non exhaustif, pour une description plus détaillée du procédé qui vient d'être rappelé, on pourra se référer avec profit à l'article de M. KAS et al., intitulé "Snakes : Active contour models", paru dans "International Journal of Computer Vision", vol. 1, N° 4, pages 321-331, 1987.

On conçoit aisément que les procédés de ce type présentent des avantages par rapports aux procédés classiques d'extraction d'objets. Ils sont notamment autonomes et auto-adaptatifs. Ils peuvent être rendus robustes vis-à- vis d'un redimensionnement d'image, en faisant appel à une fonction de lissage Gaussien lors du calcul de l'énergie de l'image.

Mais ils continuent à présenter des inconvénients non négligeables.

Tout d'abord, comme il a été rappelé, il implique toujours une étape manuelle, pour définir le "serpent" initial.

D'autre part, la précision des contours est déterminée par le paramètre de convergence retenu pour l'étape de recherche d'énergie minimale. Le temps de calcul étant proportionnel à la précision des contours demandée, il n'est pas possible d'obtenir, en une seule itération, les contours réels de l'objet à détourer.

Par ailleurs, les procédés de type contours actifs ne sont robustes au bruit que de manière très relative. En effet, l'expérience montre qu'ils ne permettent pas de détourer un objet si l'image numérique testée est très tramée ou comporte des défauts de numérisation (effets de blocs dus à la mauvaise qualité de la vidéo numérique, bruit local mais non global, etc.).

L'invention se fixe donc pour but un procédé de localisation et/ou d'extraction d'objets numériques dans une image également numérique visant à pallier les inconvénients des procédés de l'art connu, et dont certains veinent d'être rappelés, ainsi qu'un système de mise en oeuvre de ce procédé.

Dans un mode de réalisation préféré, elle propose un procédé entièrement automatique de détection de contour, c'est-à-dire sans intervention extérieure, très précis, permettant ensuite d'extraire un objet numérique au pixel près, sous la forme de polygones à n côtés, avec n ≥ 3. Le procédé n'implique pas de recourir à une convergence, ce qui rend la détection de contour très rapide.

Pour ce faire, outre une phase préliminaire d'acquisition d'une image numérique, ce qui est commun, en soi, avec la plupart des procédés de l'art connu, le procédé selon l'invention comprend, dans un mode de réalisation préféré les phases et étapes suivantes :

a/ une première phase de localisations d'objets numériques distincts dans ladite image numérique. Cette phase se décompose à son tour en quatre étapes successives :

1.- la segmentation de l'image en régions homogènes ;
2.- l'étiquetage de ces régions homogènes à l'aide d'un attribut d'états particuliers, comprenant les états suivants : un état dit "*Non Etiqueté*", un état dit *"Non Significatif",* et un état dit *"Significatif"* ;
3.- la fusion des régions voisines en zones associées à l'attribut d'état dit *"Significatif"* ;
4.- et la détermination d'aires dites "boites" englobant chacune desdites zones, avantageusement de forme rectangulaire ;

et :
b/ une seconde phase consistant en l'extraction proprement dite des objets numériques distincts, comprenant elle-même, pour chacune des "boites" précitées, trois étapes successives :

1.- l'acquisition d'un jeu de vecteurs d'interception avec les aires précitées ;
2.- la construction, à partir de ce jeu de vecteurs d'interception, d'un contour de l'objet, dit primaire ; et
3.- la reconstruction du contour réel de l'objet à extraire à partir du contour primaire.

La dernière étape consiste notamment à lisser le polygone obtenu à l'étape précédente, à détecter et à supprimer les discontinuités de ce polygone, et de façon plus générale à supprimer des effets parasites dues à une image numérique imparfaite.

On doit bien comprendre toutefois que, dans un mode de réalisation supplémentaire, le procédé peut ne comporter que la seconde phase.

En effet, si on sait, *a priori* ou par l'examen de l'image affichée sur un écran, que celle-ci ne comprend qu'un objet significatif, les bords de celle-ci peuvent constituer les côtés de la seule "boite" nécessaire à la réalisation des étapes de la seconde phase. Ces côtés forment la base à partir de laquelle les vecteurs d'interception vont être déterminés.

De façon plus générale, la seconde phase peut être initialisée simplement en traçant manuellement sur l'image numérique une "boite", c'est-à-dire un rectangle, englobant un objet à extraire. Certes, cette étape particulière est alors manuelle, mais elle n'exige ni dextérité, ni minutie particulières de la part de l'opérateur. Elle peut être réalisée en un temps très bref, par exemple à l'aide d'un outil de pointage, type "souris", et en délimitant les deux points extrêmes du rectangle décrivant la "boite" de sélection, sur un écran informatique affichant l'image numérique. Ensuite, les étapes subséquentes, c'est-à-dire celles appartenant à ce qui a été appelée la seconde phase, se déroulent de façon entièrement automatique, tout en conservant les avantages propres au procédé selon l'invention : précision du détourage, rapidité, etc.

En fin de la seconde phase, dans le mode de réalisation préféré du procédé selon l'invention, un utilisateur dispose, sans aucune intervention extérieure, de la liste de tous les objets distincts présents dans une image numérique donnée, sous la forme de polygones. Cette disposition constitue d'ailleurs un avantage supplémentaire de l'invention. La représentation informatique de ces polygones est disponible sous la forme de signaux numériques qui peuvent être stockés directement dans des mémoires d'un système de traitement de l'information, également de façon entièrement automatique, et exploités ultérieurement à diverses fins.

Dans une variante supplémentaire, l'extraction d'objets et la mémorisation des signaux numériques les représentant peuvent être étendues à une séquence d'images vidéo, et non plus seulement à des images statiques, avec éventuellement détection de redondances et mémorisation des seuls objets à occurrence unique dans la séquence précitée.

L'invention a donc pour objet un procédé de traitement d'une image numérique en vue d'en extraire des objets numériques constitués par des régions de pixels à caractéristiques optiques homogènes, lesdites régions ayant un contour fermé, caractérisé en ce qu'il comprend :

- une phase de localisation d'au moins un desdits objets numériques comprenant au moins une étape de création, dans ladite image numérique, d'une aire fermée englobant cet objet numérique, les coordonnées des pixels la composant étant déterminées par rapport à un référentiel déterminé lié à ladite aire fermée ;

- et une phase d'extraction automatisée d'au moins un objet numérique comprenant les étapes suivantes :

   a/ l'acquisition d'un jeu de vecteurs d'interception avec ledit contour de l'objet, représentant chacun une coordonnée d'un point de ce contour par rapport audit référentiel, l'interception étant déterminée par la fixation préalable d'un paramètre formant seuil, caractérisant ladite homogénéité et la détection de la variation de ce paramètre au delà de ce seuil;

   b/ l'acquisition, à partir de ce jeu de vecteurs d'interception, des coordonnées, par rapport audit référentiel, des points décrivant un premier contour de l'objet numérique dit primaire ; et

   c/ la reconstruction à partir de ce contour, dit primaire, d'un second contour représentant le contour réel dudit objet à extraire, par élimination de bruits parasites et lissage dudit contour primaire.

L'invention a encore pour objet un système pour la mise en oeuvre de ce procédé.

L'invention sera mieux comprise et d'autres caractéristiques et avantages apparaîtront à la lecture de la description qui suit en référence aux figures annexées, parmi lesquelles :

- les figures 1A à 1H illustrent les principales étapes d'une première phase du procédé, selon un mode de réalisation préféré de l'invention, ou phase de localisation des objets contenus dans une image numérique ;

- les figures 2A et 2B sont des diagrammes illustrant schématiquement les relations de voisinage entre pixels d'une image numériques, selon deux méthodes ;

- les figures 3A à 4D illustrent les principales étapes d'une seconde phase du procédé, selon un mode de réalisation préféré de l'invention, ou phase d'extraction des objets contenus dans une image numérique ;

- les figures 4E à 4I illustrent des opérations particulières exécutées pendant la dernière étape de la phase d'extraction d'objets ;

- la figure 5 illustre schématiquement l'architecture d'une chaîne de traitement d'image numérique comprenant un système de localisation et/ou d'extraction d'objets numériques contenus dans une image numérique, pour la mise en oeuvre du procédé selon l'invention ;

- et la figure 6 illustre schématiquement les principaux composants d'un exemple de système de localisation et/ou d'extraction d'objets numériques contenus dans une image numérique, pour la mise en oeuvre du procédé selon l'invention.

On va maintenant décrire de façon plus détaillée le procédé de localisation et/ou d'extraction automatique d'objets dans une image numérique selon un mode de réalisation préféré de l'invention. En effet, selon ce mode de réalisation, le procédé comprend deux phases : une première phase permettant la localisation des objets numériques dans une image numérique donnée et une seconde phase permettant l'extraction proprement dite de ces objets. Chacune de des phases comprend plusieurs étapes, comme il a été indiqué.

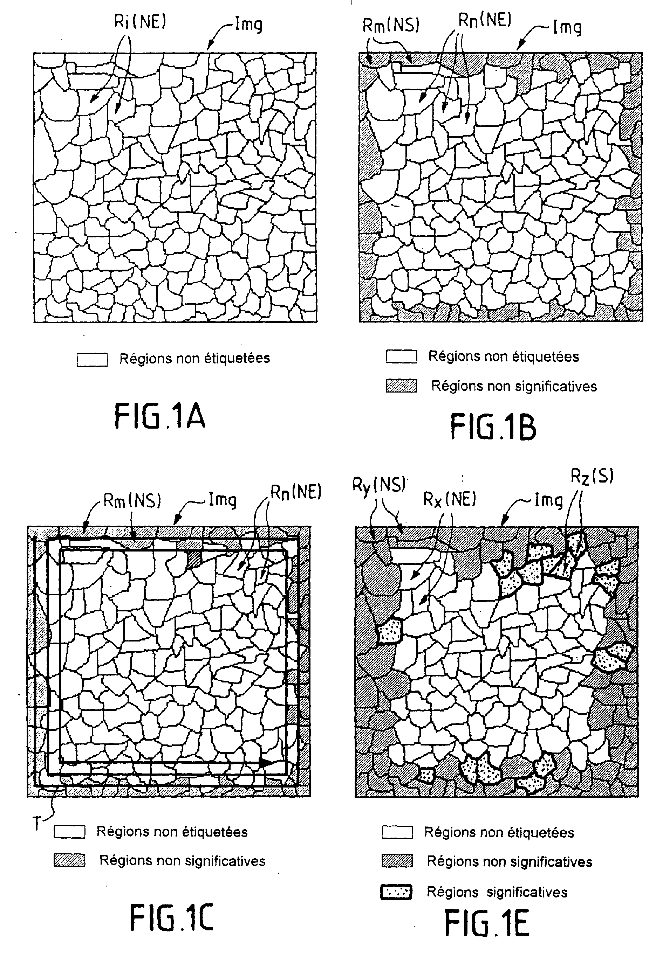

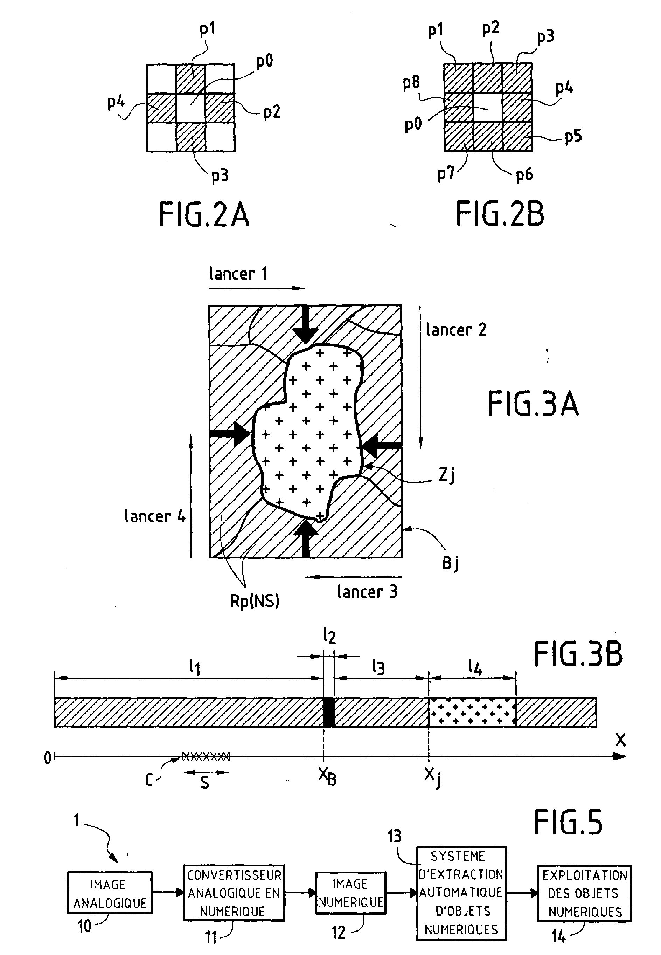

La première phase va être décrite par référence aux figures 1A à 1E, et aux figures 2A et 2B.

On va tout d'abord définir plus précisément ce qui est appelé "objet numérique" (que l'on appellera ci-après simplement "objet") dans le cadre du procédé de l'invention. Il s'agit d'un ensemble de régions homogènes de pixels d'une image numérique. Pour chaque pixel, il existe au moins un autre pixel qui lui est adjacent dans cette région, qui est considéré comme son voisin par rapport à une relation de voisinage, et qui peut être de l'un des types dits "4-voisinage" ou "8-voisinage", pour un tableau à deux dimensions. Sur la figure 2A, on a représenté une relation de type dit "4-voisinage". Le pixel central $p_0$ est entouré de quatre pixels, $p_1$ à $p_4$, disposés en croix, selon deux directions orthogonales. Sur la figure 2B, on a représenté une relation de type "8-voisinage". Le pixel central $p_0$ est au centre de huit pixels, $p_1$ à $p_8$, qui l'entourent complètement (les huit pixels formant un carré).

Généralement, l'image numérique est une image couleurs comprenant plusieurs canaux, par exemple trois canaux pour un codage "RVB". Le procédé est cependant tout à fait compatible avec une image monocolore, notamment en niveaux de gris. Elle ne comporte alors qu'un seul canal, que l'on appellera de façon générique de couleur.

À partir de là, on peut définir plus précisément une région homogène. On fixe une valeur déterminée d'un paramètre que l'on appellera facteur d'homogénéité δ. Une région de pixels est dite homogène si, pour tous les pixels de cette région, la relation suivante est satisfaite :

$$|I(P(n)) - I(P(n+1))| < \delta \qquad (1),$$

avec $I(P(n))$ et $I(P(n+1))$ représentant les intensités lumineuses de pixels $P(n)$ et $P(n+1)$ adjacents voisins, de rang $n$ et $n+1$, respectivement, et $n$ étant un nombre entier arbitraire. Lorsque l'image numérique comporte plusieurs canaux de couleur, la relation (1) doit être vérifiée pour tous les canaux.

Ces précisions étant données, on va maintenant décrire la phase de localisation des objets présents dans une image numérique. Naturellement, on suppose que, dans une phase préliminaire, une image numérique de résolution quelconque a été acquise. Cette image sera référencée ci-après *Img.* De façon pratique l'image numérique *Img* est stockée dans un organe de mémorisation, par exemple la mémoire vive d'un système de traitement de l'information, pendant tout le processus de localisation des objets (lors de la première phase) et d'extraction de ces objets (lors de la seconde phase). Cette image numérique *Img* sert d'entrée à un système de localisation et/ou d'extraction d'objets dans une image numérique qui sera décrit ci-après.

La première étape de la première phase consiste, en application de la diffusion, à segmenter l'image numérique *Img* en régions homogènes, répondant à la définition qui vient d'en être donnée. La figure 1A illustre l'image numérique *Img*, segmentée en régions homogènes. Pendant cette étape, on définit ainsi *i* régions distinctes, *i* étant tel que :

$$1 < i < m_{max} \qquad (2),$$

avec $m_{max}$ égal au nombre maximum de régions homogènes trouvées.

Le nombre maximum de régions homogènes $m_{max}$, pour une image numérique *Img* donnée, dépend naturellement du choix effectué pour le paramètre δ, qui constitue une valeur de seuil. Pour chaque région, on conserve les intensités lumineuses maximale et minimale des pixels de cette région. On définit ainsi la plage de couleur de la région, soit :

$$\text{intervalle [minimum ; maximum]} \qquad (3).$$

En fin de première étape, on enregistre dans une mémoire, avantageusement sous forme de listes, les données acquises, et notamment les données caractérisant chaque pixel : identification de la région d'appartenance, coordonnées, etc.

Lors de la deuxième étape, on associe chacune des régions avec un attribut que l'on appellera ci-après "étiquette". Plus précisément, cet attribut ou étiquette peut prendre trois valeurs, que l'on appellera arbitrairement état *"Non Etiqueté"* ou *"NE",* état *"Non Significatif"* ou *"NS",* et état *"Significatif"* ou *"S"*. L'état *"NE"* est un état temporaire initial et les deux autres états, *"NS"* et *"S"*, correspondent aux régions de l'arrière-plan et aux régions des objets à localiser, respectivement.

Par défaut, toutes les régions sont initialisées à l'état *"NE",* comme illustré sur la figure 1A : régions référencées *R(NE).* Cela signifie que l'on n'a pas encore attribué aux régions un état "réel", même provisoire. Les coordonnées des pixels de chaque région, leur indice *i* (voir (2)), ainsi que leur étiquette ("*NE*" dans le cas présent) sont stockés dans une mémoire.

Le processus de localisation d'objets dans l'image numérique *Img* est démarré en initialisant arbitrairement toutes les régions situées en bord d'image à l'état *"NS".* La figure 1B illustre l'étiquetage de l'image à ce stade du processus. Il existe désormais deux types de régions, celles situées en bord d'image, que l'on a référencé $R_m(NS),$ et celles situées au centre de l'image *Img,* encore non étiquetées, que l'on a référencé $R_n(NE)$, avec $n$ et $m$ des nombres entiers tels que :

$$n + m = n_{max} \qquad (4).$$

Sur la figure 1B, les régions $R_n(NE)$ ont été laissées en blanc et les régions $R_m(NS)$ sont représentées en hachuré.

Ensuite, le processus va se poursuivre, en vue d'étiqueter toutes les régions de l'image numérique *Img.* Pour ce faire, on parcourt toute l'image numérique *Img*, en partant, avantageusement, d'une des extrémités et en suivant une trajectoire en spirale *T* composée de segments de droites rectilignes parallèles aux bords de cette image, comme illustré par la figure 1C. Toutes les régions présentes dans l'image numérique *Img* doivent être balayées, soit $N_{max}$ régions. Pour ce faire, il suffit que le pas de la spirale T soit suffisamment faible. A la limite, le pas peut être égal à la distance séparant deux pixels, ce qui peut être déterminé aisément connaissant la résolution de l'image numérique *Img*.
Lorsque le balayage traverse une région, il existe *a priori* deux possibilités et deux seulement, puisque les régions frontières de l'image numérique *Img* ont été initialisées à l'état *"NS"* :

a/ la région est à l'état *"Significatif"* *"S"*, *ou*

b/ la région est à l'état *"Non Significatif"* "*NS*".

Dans le premier cas, les régions voisines sont testées pour connaître leur étiquetage. Pour chaque région voisine à l'état *"NE"*, si l'interception des plages de couleur (voir relation (3)) de la région "*S*" et de la région voisine existe, alors on étiquette aussi cette région voisine à l'état "S". Dans le cas contraire, on étiquette cette région voisine à l'état *"NS"*.
Dans le second cas, les régions voisines sont également testées pour connaître leur étiquetage. Pour chaque région voisine à l'état *"NE"*, si l'interception des plages de couleurs de la région *"NS"* et de la région voisine existe, alors on étiquette aussi cette région voisine à l'état *"NS"*. Dans le cas contraire, on étiquette cette région voisine à l'état "*S*".
La figure 1E illustre un stade intermédiaire du processus d'étiquetage des régions. Il existe désormais trois types de régions, celles étiquetées à l'état *"Non Significatif"*, référencées *Ry(NS)*, celles étiquetées à l'état *"Significatif"*, référencées *Rz(S)*, et celles situées au centre de l'image *Img,* encore non étiquetées, référencées *Rx(NE)*, avec *x*, *y* et *z* des nombres entiers tels que :

$$x + y + z = n_{max} \qquad (5).$$

Sur la figure 1E, les régions $R_z(S)$ sont remplies de points pour les différencier des deux autres types de régions (motifs blanc et hachuré, respectivement).

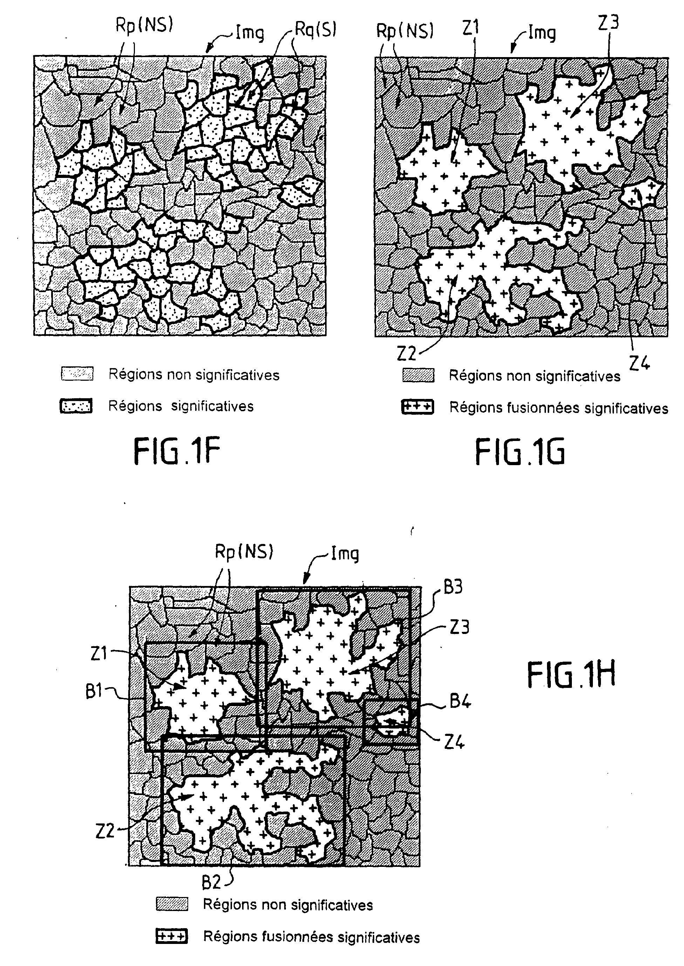

La figure 1F illustre la fin du processus d'étiquetage : toutes les régions sont étiquetées de façon définitive. De nouveau, il n'existe plus que deux types de régions : régions à l'état *"NS"*, référencées *Rp(NS),* et régions à l'état "*S*", référencées *Rq(S)*, avec *p* et *q* des nombres entiers vérifiant la relation :

$$p + q = n_{max} \qquad (6).$$

Les données acquises lors de cette étape sont également enregistrées dans une mémoire et complètent celles enregistrées en fin de première étape.
La troisième étape de la première phase consiste à fusionner toutes les régions voisines à l'état "*S*". En effet, comme il a été indiqué, les régions à l'état "*S*" délimitent des aires de l'image numérique *Img* correspondant aux objets à localiser. En d'autres termes, chaque fusion de régions voisines détermine une zone particulière de l'image correspondant à un des objets recherchés.
Dans l'exemple illustré, comme le montre plus particulièrement la figure 1G, il existe quatre zones significatives distinctes, correspondant à autant d'objets localisés. Ces zones, référencées $Z_1$ à $Z_4$, respectivement, sont repérées par des croix sur la figure 1G. Elles sont séparées par d'autres zones, constituées par les *p* régions *Rp(NS)*, c'est-à-dire à l'état *"NS"*. L'ensemble de ces dernières zones constitue l'arrière-plan de l'image numérique *Img*.
Les données enregistrées lors de la deuxième étape sont rafraîchies, pour tenir compte de la fusion précitée.
La quatrième étape de la première phase consiste à déterminer, à partir des données mémorisées, des fenêtres ou boîtes englobant, chacune, l'un des objets localisés, à savoir quatre boîtes dans l'exemple décrit, $B_1$ à $B_4$, respectivement. Les boîtes, $B_1$ à $B_4$, sont avantageusement de forme rectangulaire et volontairement étendue, pour faciliter les étapes de la seconde phase, ou phase d'extraction des objets proprement dite. L'obtention des boîtes est simple, puisque l'on a notamment enregistré les coordonnées des pixels compris dans les zones fusionnées, $Z_1$ à $Z_4$. Il suffit de chercher les coordonnées du pixel le plus haut et à gauche de ces zones et du pixel le plus bas et à droite, par exemple. La détermination de ces deux points est suffisante pour caractériser entièrement un rectangle. On étend ensuite le rectangle obtenu par ajout d'une distance prédéterminée (exprimée en pixels), suivant les directions verticale et horizontale. Les données identifiant les boîtes sont enregistrées.

La seconde phase est réalisée pour chacune des zones significatives $Z_1$ à $Z_4$, et comprend trois étapes. Les paramètres d'entrée sont constitués par l'image numérique *Img* et chacune des boîtes, $B_1$ à $B_4$, et leur contenu. Chacune de ces boîtes, $B_1$ à $B_4$, peut être assimilée à une image élémentaire contenant un seul objet à extraire.

La première étape consiste à acquérir un jeu de vecteurs d'interception.

On définit un rayon d'interception comme étant un parcours linéaire le long d'une ligne ou d'une colonne d'une image numérique, en vue de détecter l'abscisse ou l'ordonnée d'un point contour de l'image par rapport à des axes de référence orthonormés. Dans le cadre du procédé de l'invention, les axes orthonormés sont constitués par les côtés orthogonaux d'une des boîtes précitées, $B_1$ à $B_4$, et l'image est constituée par la zone significative qu'elle englobe, $Z_1$ à $Z_4$, respectivement. On peut donc connaître les coordonnées de chacun des points du contour de ces zones, soit par rapport aux côtés de ces boîtes, $B_1$ à $B_4$, soit par rapport aux côtés de l'image numérique *Img,* par de simples transformations de coordonnées, les positions relatives des boîtes, $B_1$ à $B_4$, à l'intérieur du cadre de l'image numérique *Img*, étant connues.

De façon plus précise, un lancer de rayons d'interception, dit vertical, correspond à lancer, pour chaque colonne d'une des boîtes, $B_1$ à $B_4$, un rayon d'interception (dans le sens haut-bas ou le sens bas-haut) en vue de détecter l'ordonnée d'un point de contour de la zone englobée correspondante, $Z_1$ à $Z_4$. Les ordonnées des points détectés sont mémorisées dans un vecteur d'interception, dont la taille est égale à la hauteur de l'image source, c'est-à-dire l'une des zones $Z_1$ à $Z_4$.

De même, un lancer de rayons d'interception, dit horizontal, correspond à lancer, pour chaque ligne d'une des boîtes, $B_1$ à $B_4$, un rayon d'interception (dans le sens gauche-droite ou le sens droite-gauche) en vue de détecter l'abscisse d'un point de contour de la zone englobée correspondante, $Z_1$ à $Z_4$. Les abscisses des points détectés sont mémorisées dans un vecteur d'interception, dont la taille est égale à la largeur de l'image source, c'est-à-dire l'une des zones $Z_1$ à $Z_4$.

Dans le cadre du procédé de l'invention, on procède à quatre lancers de rayons : deux lancers verticaux et deux lancers horizontaux. En outre, comme illustré plus particulièrement sur la figure 3A (en prenant comme exemple une boîte $B_j$, d'indice quelconque *j*, et la zone englobée $Z_j$), on procède préférentiellement dans l'ordre suivant :

| | | |
|---|---|---|
| *Lancer 1* | lancer horizontal | sens gauche-droite ; |
| *Lancer 2* | lancer vertical | sens haut-bas ; |
| *Lancer 3* | lancer horizontal | sens droite-gauche ; |
| *Lancer 4* | lancer vertical | sens bas-haut. |

Les flèches représentées en gras sur la figure 3A représentent les directions des lancers.

L'un des avantages présentés par le procédé selon l'invention est qu'il n'est pas nécessaire que le fond de l'image, en l'occurrence l'image élémentaire constituée par l'intérieur de la boîte *Bj*, soit uniforme (transparent ou d'une couleur homogène prédéterminée). Tout au contraire, le fond n'est généralement pas uniforme, mais constitué d'une ou plusieurs régions étiquetées "NS" : régions $R_p(NS)$.

Toujours dans le cas général, l'intensité des pixels rencontrés lors d'un lancer ne reste pas constante dans les régions "NS" pour passer brusquement à une autre valeur lors du croisement entre la frontière (contour) de ces régions et la zone $Z_j$ (région "*S*").

Selon un mode de réalisation préféré de l'invention, on utilise une méthode adaptative pour détecter l'interception du contour de $Z_j$. Cette méthode va être détaillée par référence à la figure 3B.

On choisit un nombre entier prédéterminé de pixels *N*, typiquement 3 à 5. On va considérer, pour illustrer la méthode, un lancer horizontal d'axe 0*X (lancer 1)*, parallèle aux côtés horizontaux de la boîte $B_j$ (direction gauche-droite). On appelle *C* le point courant de la progression du lancer suivant cet axe 0*X*. Au départ, *C* est l'abscisse du premier pixel étudié, c'est-à-dire le premier pixel *P(C)* à partir du bord vertical gauche de la boîte *Bj*. Si on appelle enfin *S* un ensemble de N pixels successifs à *C* lors du parcours du rayon, *C* est un point de contour si et seulement si, pour tout pixel *P(x)* appartenant à *S*, la relation suivante est vérifiée :

$$|I(P(C)) - I(P(x))| > \delta \qquad (7),$$

avec $\delta$ représentant le facteur d'homogénéité précédemment défini (voir relation (1)), et *I(P(C))* et *I(P(X))* étant les intensités des pixels correspondants. Si la relation (7) est vérifiée, tous les pixels de *S* sont hétérogènes avec *C*, et *C* est donc, de ce fait, un pixel du contour significatif, c'est-à-dire un contour de $Z_j$.

Dans le cas contraire, le point suivant par rapport à l'ensemble considéré S devient le nouveau point *C*, et le test d'homogénéité qui vient d'être décrit est réitéré.

Il doit être clair, que pour un lancer donné le long d'un axe, le test peut être négatif sur toute la largeur (ou la longueur) de la boîte $B_j$. C'est le cas, par exemple, des lancers horizontaux, dans la partie haute de la figure 3A, car le rayon n'intercepte pas la zone $Z_j$. Dans ce cas particulier, le dernier pixel rencontré constitue le point de contour.

Sur la figure 3A, on a subdivisé le parcours du rayon le long de l'axe OX en plusieurs tronçons qui illustrent les principaux cas rencontrés, hormis le cas particulier décrit ci-dessus (pas d'interception). Tout d'abord, sur une longueur $l_1$ (exprimée en pixels) supérieure à $S$ ($N$ pixels), le lancer de rayon progresse dans des régions étiquetées *"NS"*. La relation (7) n'est jamais vérifiée. Puis, il intercepte en $X_B$ un point qui s'apparente à un point de contour, car la relation (7) semble vérifiée. Cependant, la longueur de parcours (en pixels) pendant laquelle cette relation pourrait être vérifiée est égale à $l_2$, avec $l_2 < S$. Il s'agit en réalité d'un bruit local ou "artefact" qui doit être "sauté" par le lancer de rayon, sous peine d'une détection erronée de coordonnée de $Z_j$ (en l'occurrence d'un point d'abscisse erroné). Après avoir traversé cette zone bruitée, le lancer de rayon progresse de nouveau dans des régions étiquetées *"NS"*, sur une longueur $l_4$. Enfin, en $X_j$, le lancer de rayon intercepte réellement le contour de $Z_j$. La relation (7) est vérifiée, car la longueur $l_4$ (en pixel) de la zone rencontrée est supérieure à $S$. $X_j$ est donc bien l'abscisse d'un des points appartenant au contour recherché de la zone significative $Z_j$.

La deuxième étape de la seconde phase consiste à construire un contour de l'objet à extraire, que l'on appellera primaire, ou brut, et que l'on référencera $Co_p$. Celui-ci est construit à partir du jeu de vecteurs d'interception qui vient d'être acquis. On prend en compte, comme il a été indiqué précédemment, deux lancers de rayons d'interception horizontaux et deux lancers verticaux.

De façon plus précise, on construit le contour primaire $Co_p$ en analysant, dans un premier temps, les vecteurs deux à deux : une paire de vecteurs horizontaux, puis une paire de vecteurs verticaux, par exemple. On exploite ensuite cette analyse, de façon fine, dans une étude globale concernant les quatre vecteurs.

Une méthode simplifiée pour assurer qu'un point $I$ donné appartient bien au contour recherché, c'est-à-dire est dit "éligible", va maintenant être détaillée.

On appelle $EP(k)$ l'ensemble des points appartenant au contour primaire de l'objet à extraire (c'est-à-dire la zone significative $Z_j$, par exemple), avec $k$ étant un indice associé à chaque point. L'indice $k$ est un nombre entier et le nombre total de points de l'ensemble est fini, car l'image $Img$ et chaque objet à extraire sont de nature numérique. L'ensemble $EP(k)$ est vide au départ. On appelle $G(k)$ et $D(k)$ les vecteurs d'interception correspondant aux lancers horizontaux de rayons, de sens gauche-droite et droite-gauche, respectivement.

Pour tout $y$ vérifiant la relation suivante :

$$0 \leq y < \text{hauteur } de\ l'image \qquad (8),$$

le point $I$, d'abscisse $G(y)$ et d'ordonnée $y$, est éligible pour appartenir au contour primaire si et seulement si :

$$G\ (k) < D\ (k) \qquad (9),$$

De même, le point $I$, d'abscisse $D(y)$ et d'ordonnée $y$, est éligible pour appartenir au contour primaire, si et seulement si :

$$D(k) > G(k) \qquad (10).$$

Les coordonnées des points de l'ensemble $EP(k)$, ainsi que les indices associés, sont mémorisés. Cet ensemble peut être représenté par un polygone, et être affiché sur un écran informatique par exemple.

Cependant, le contour primaire $Co_p$ comporte un certain nombre d'imperfections ou d'artefacts, qu'il faut éliminer.

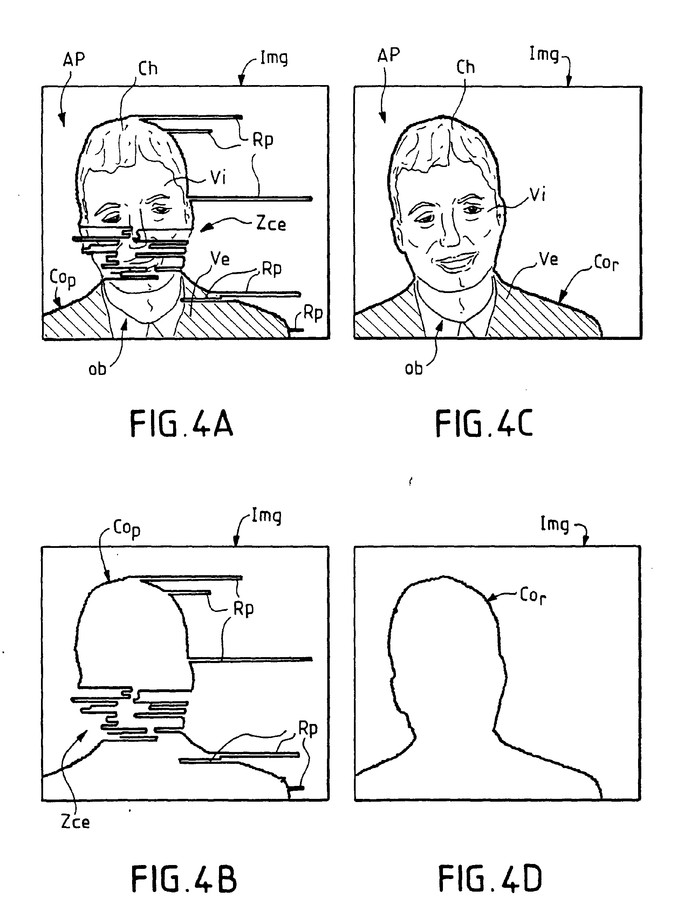

On va illustrer cet état de fait par référence aux figures 4A à 4D. Ces figures sont relatives à une image numérique $Img$ ne comportant qu'un seul objet significatif référencé $Ob$. De façon plus précise, l'image numérique $Img$ est constituée par une photographie du type "identité" représentant le haut d'un sujet : épaules et visage. On suppose que ce sujet porte une veste Ve sombre, que ses cheveux $Ch$ sont foncés, et que l'arrière-plan (fond) $Ap$ est de teinte claire. On suppose enfin que la texture de l'arrière-plan $Ap$ se rapproche de celle du visage $Vi$ du sujet, le visage $Vi$ étant également de teinte claire. Il y a donc *a priori* peu de contraste lumineux entre l'arrière-plan $Ap$ et le visage $Vi$.

Dans ces conditions, on constate que le contour primaire $Cop$ (représenté en trait gras) ne suit pas exactement le contour réel de l'objet $Ob$, comme le montre plus particulièrement la figure 4A. Il comporte des raies parasites $Rp$, d'une part, et une zone de contour erronée $Zce$, d'autre part. Les raies parasites $Rp$ sont essentiellement dues à des bruits parasites résiduels très importants, qui n'ont pu être éliminés lors de la première étape de cette phase d'extraction (voir figure 3B). Le contour erroné *Zce* est dû à la similitude de teinte et de texture entre le visage *Vi* et l'arrière-plan *Ap*.

Plus précisément, dans l'exemple décrit, compte tenu des particularités et de la disposition des différentes zones de l'objet détecté *Ob* dans l'image *Img*, ce sont essentiellement les lancers horizontaux qui vont générer des erreurs de contour. En effet, il existe un contraste important entre l'arrière-plan *Ap* et les cheveux *Ch*, d'une part, et entre l'arrière-plan *Ap* et la veste *Ve*, d'autre part. L'analyse des lancers verticaux ne va donc pas générer des erreurs de contours, puisqu'ils interceptent les limites des cheveux *Ch* ou de la veste *Ve*, lorsqu'ils pénètrent dans la région de l'image *Img* couverte par l'objet *Ob*. De façon encore plus spécifique, dans l'exemple décrit, la zone d'erreurs de contour *Zce* est localisée dans le bas du visage *Vi*, entre le haut la veste *Ve* et le bas des cheveux *Ch*. On constate une multitude de créneaux horizontaux formant des va-et-vient de part et d'autre des limites du visage *Vi*, à droite et à gauche de celui-ci, c'est-à-dire pénétrant à l'intérieur de la zone couverte par ce denier et ressortant dans la zone couverte par l'arrièré-plan *Ap*. Ces créneaux peuvent présenter des recouvrements entre eux.

On a représenté sur la figure 4B le contour primaire obtenu *Co$_p$*, isolé de l'objet *Ob*, c'est-à-dire du personnage photographié. On comprend aisément qu'un tel contour ne soit pas exploitable directement.

La troisième étape de la seconde phase consiste en la reconstruction, à partir du contour primaire obtenu à l'étape précédente, d'un contour d'objet *Co$_r$* que l'on pourra appeler réel, ce avec une très grande précision. Cette étape est illustrée par référence aux figures 4C et 4D.

Pour ce faire, on applique un jeu de règles, qui se traduiront par des sous-étapes.

Il est notamment nécessaire de supprimer, s'ils existent, les recouvrements du contour.

De même, les éventuelles discontinuités de contour dues à une qualité d'image numérique médiocre doivent être détectées et le polygone précité doit être lissé en respectant le principe de continuité des courbes.

L'élimination des recouvrements du contour polygonal va maintenant être explicitée en regard des figures 4E à 4G. Sur la figure 4E, on a représenté deux tronçons de contour, qui se présentent sous la forme de deux suites de segments de droites. Ces deux suites sont associées aux indices *a* et *b* respectivement, et l'on appellera arbitrairement les tronçons correspondants contours droit et gauche. On a représenté cinq points d'inflexion pour chacun des deux contours, *Pa*(1) à *Pa*(6) et *Pb*(1) à *Pb*(6), respectivement. On constate que les deux contours se coupent en deux points (deux intersections), *I* et *J*, du fait que le point d'inflexion *Pb*(4) est situé à gauche du contour de gauche. Les deux points d'intersection, dans l'exemple, entourent le point *Pa*(4) du contour de gauche.

Il y a donc lieu d'éliminer le recouvrement. Pour ce faire, pour chaque intersection détectée, *I* et *J*, on procède comme décrit ci-après.

On considère, à titre d'exemple, les segments [*Pa*(3), *Pa*(4)] et [*Pb*(3), Pb(4)], associés au point d'intersection *I*. Pour chacun de ces segments, on mesure un paramètre, *Ca* et *Cb* respectivement, reflétant une continuité des segments par rapport aux contours auxquels ils appartiennent.

Pour le segment [*Pa*(3), *Pa*(4)], le paramètre *Ca* obéit à la relation suivante (11) :

$$Ca = \overparen{(Pa(2)\,Pa(3)\,Pa(4)} \mod \pi) + \overparen{(Pa(3)\,Pa(4)\,Pa(5)} \mod \pi),$$

avec

$$\overparen{"Pa(x)\,Pa(y)\,Pa(z)"},$$

un angle orienté formé par trois points consécutifs quelconque, $_x$, $_y$ et z du polygone, et "mod $\pi$", une opération modulo $\pi$.

Pour le segment [*Pb*(3), *Pb*(4)], le paramètre *Cb* obéit à la relation suivante (12) :

$$Cb = \overparen{(Pb(2)\,Pb(3)\,Pb(4)} \mod \pi) + \overparen{(Pb(3)\,Pb(4)\,Pb(5)} \mod \pi).$$

Les paramètres *Ca* et *Cb* reflétant ce que l'on peut appeler un "degré de continuité" par rapport au polygone, plus ces valeurs sont faibles, plus le degré de continuité est fort.

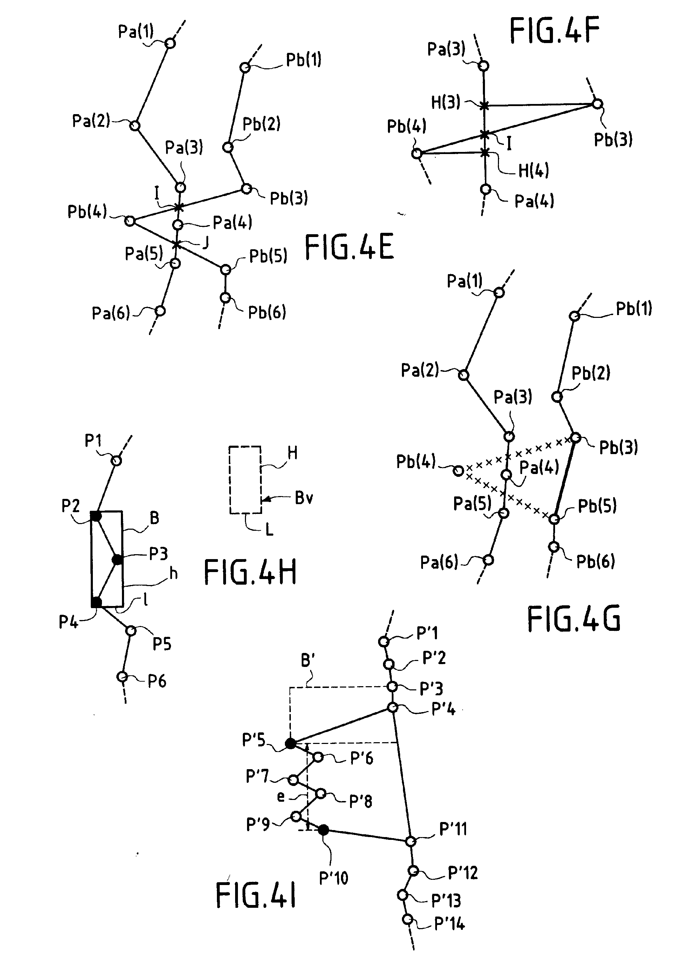

Il s'ensuit que, pour éliminer le recouvrement détecté, on modifie le segment le moins "continu", en l'occurrence le segment [*Pb*(3), *Pb*(4)], car *Cb* est plus important que Ca (dans l'exemple). Modifier ce segment signifie qu'il faut supprimer l'un des deux points d'extrémité de ce segment. Pour déterminer le point à supprimer, *Pb*(3) ou *Pb*(4), on procède comme illustré sur la figure 4F. On calcule les projetés orthogonaux *H*(3) et *H*(4) des points *Pb*(3) et *Pb* (4), respectivement, c'est-à-dire les distances $\overline{H(3)Pb(3)}$ et $\overline{H(4)Pb(4)}$. Dans l'exemple décrit, on obtient $\overline{H(4)Pb(4)}$ < $\overline{H(3)Pb(3)}$. On en tire la conclusion que c'est le point *Pb*(4) qui doit être supprimé, car le plus proche du segment [*Pa*(3), *Pa*(4)].

On relie ensuite directement les deux points *Pb*(3) et *Pb*(5), comme illustré sur la figure 4G (segment en trait gras) . On a représenté, par des croix, les segments supprimés : [*Pb*(3), *Pb*(4)] et [*Pb*(4), *Pb*(5)], du contour de droite. On constate bien qu'il n'existe plus d'intersections entre les deux contours partiels, l'intersection J ayant également été supprimée par ce processus.

On va maintenant décrire le processus de lissage du polygone. Pour ce faire, on passe en paramètre trois entiers, exprimés en pixels, à savoir une longueur *L*, une hauteur *H* et un paramètre d'éloignement *E*. Pour fixer les idées, on peut sélectionner les valeurs typiques suivantes : *L* = 5 pixels, *H* = 5 pixels et 5 ≤ E ≤ 10.pixels. Les paramètres d'entrée, *H* et *L*, définissent une boite virtuelle rectangulaire *Bv*.

On effectue ensuite, de façon itérative (pas à pas), une suite d'opérations consistant à suivre le contour du polygone et à sélectionner, à chaque pas, trois points consécutifs du polygone (c'est-à-dire deux segments également consécutifs). Sur la figure 4H, on a représenté un tronçon de polygone comprenant six points d'inflexion, *P*1 à *P*6. Pour chacune des séries de trois points consécutifs, par exemple la série de points *P*2 à *P*3, on calcule les dimensions en pixels d'une boîte *B* les englobant, c'est-à-dire en l'occurrence un rectangle de hauteur *h* et de largeur *l*. Si *l*>*L* et/ ou *h*>*H*, on marque le point intermédiaire, *P*3, à un premier état dit invalide pour le polygone. Ses coordonnées sont mémorisées, mais ce point n'est pas immédiatement supprimé. Dans le cas contraire, le point intermédiaire, *P*3, est marqué à un second état dit valide. En fin du processus d'itérations, tous les points invalides du polygone sont donc connus et mémorisés.

Le processus revient donc à comparer, à chaque nouveau pas, la largeur *L* et la hauteur *H* de la boite réelle *B* englobant trois points consécutifs, à la largeur *l* et la hauteur *h* de la boite virtuelle *Bv*.

Le troisième paramètre, l'éloignement *E*, va être utilisé pour supprimer effectivement les points invalides et lisser le polygone. Sur la figure 4I, on a représenté une portion de polygone comprenant quatorze points d'inflexion, *P'*1 à *P'*14. Par rapport à la verticale (dans l'exemple décrit), il existe trois parties distinctes : deux parties extrêmes comprenant les points *P'*1 à *P'*4 et *P'*11 à *P'*14, sensiblement alignés, et une partie intermédiaire comprenant les points *P'*5 à *P'*9, fortement décalée vers la gauche. Les points *P'*5 et *P'*9 ont été représentés en noir sur la figure 4I et sont des points du polygone déclarés invalides. En effet, du fait de la longueur propre du segment [*P'*4, *P'*5], la boîte *B'* englobant les points *P'*4, *P'*5 et *P'*6 a, au moins, une largeur supérieure à la largeur prédéterminée *L*, saisie comme paramètre d'entrée. Il en est de même du point *P'*10, pour les mêmes raisons. Cependant, si l'on s'en tient aux seuls critères précédemment utilisés (largeur *L* et hauteur I), les points intermédiaires, *P'*6 à *P'*9, seront déclarés valides. L'éloignement e entre deux points invalides, en l'occurrence *P'*5 et *P'*9, permet de déterminer le nombre de points intermédiaires valides, soit quatre dans l'exemple : *P'*6 à *P'*8. Si e est supérieur à l'éloignement prédéterminé, E, entré comme paramètre, alors il y a lieu de supprimer les points intermédiaires, *P'*6 à P'8. On supprime également les points invalides, *P'5* et *P'*9, et on réunit les points valides, amont et aval, du tronçon traité, soit *P'*4 et *P'*11. On obtient un nouveau segment, représenté en traits pointillés gras sur la figure 4I, reliant directement les points *P'*4 et *P'*11. L'opération de lissage est alors terminée, du moins pour cette partie du polygone.

La figure 4C illustre le contour réel Co*r* finalement obtenu et l'objet *Ob* qu'il entoure. La figure 4D illustre le contour réel seul *Cor*. On constate la disparition des raies parasites (figure 4A : Rp) et le contour réel obtenu *Cor* suit fidèlement les limites de l'objet *Ob*.

A partir du moment où le contour réel *Cor* de l'objet *Ob* à extraire est reconstruit, l'objet lui-même *Ob* peut être obtenu aisément à partir de l'image source *Img*, en excluant tous les points situés à l'extérieur du contour et en ne gardant que les données d'information associées aux points intérieurs au contour *Cor* : luminosité, couleurs, coordonnées, etc. Ces informations peuvent être obtenues à partir de l'image numérique globale *Img* précédemment mémorisée. Cette image numérique *Img* constitue un des paramètres d'entrée, comme il a été indiqué. Ces données d'information peuvent être mémorisées en vue de reconstituer à tout moment l'objet extrait *Ob*, pour des usages ultérieurs qui seront détaillés ci-après.

A titre d'exemple non exhaustif, on va décrire brièvement l'application du procédé selon l'invention à la technique dite de "compositing". Il s'agit de superposer, à des fins de trucage par exemple, l'objet *Ob*, ou avant-plan, sur un arrière-plan entièrement différent de l'arrière-plan d'origine : paysage, foule, etc. La première étape consiste à obtenir, en suivant les phases et étapes du procédé de l'invention, le contour définitif de l'objet *Ob,* que l'on a appelé réel Co*r* (figure 4D). On peut procéder ensuite à un remplissage de ce contour Co*r* par une couleur uniforme, par exemple le noir, pour constituer un masque de transparence. La superposition de l'image numérique d'origine *Img,* du masque de transparence obtenu à l'étape précédente et d'une image constituant le nouveau fond va permettre d'obtenir une nouvelle image sur laquelle l'avant-plan est l'objet détouré et l'arrière-plan le nouveau fond.

Pour certaines applications, il peut être souhaitable que l'objet *Ob* laisse transparaître de façon plus ou moins prononcée le nouvel arrière-plan. Ce résultat peut être obtenu par des techniques bien connues, en assignant au masque un coefficient d'opacité déterminé. De même, il est possible d'obtenir plusieurs couches de superposition, ou "layers" selon la terminologie anglo-saxonne, en réitérant tout ou partie des étapes précédentes.

De façon générale, tous types d'effets spéciaux peuvent être appliqués sur une image représentée par l'objet détouré seul ou sur une image composite, du type de celle qui vient d'être décrite : inversion vidéo, pseudo-solarisation, flous, déformations diverses, etc. Ces méthodes sont biens connues de l'Homme de Métier, et il est inutile de les décrire plus avant.

D'autres types classiques d'exploitation d'objets numériques, tels ceux extraits par le procédé de l'invention, sont relatifs à l'indexation, au post-traitement, à l'archivage, à la classification, etc.

Si l'image numérique *Img* comporte plusieurs objets distincts, comme il a été implicitement admis jusqu'à présent (figure 1H : zones $Z_1$ à $Z_4$), les étapes 1 à 3 peuvent être réitérées, si l'on désire extraire tous les objets. On dispose alors d'une liste d'objets présents dans l'image, chaque objet étant associé à un ensemble polygonal de points qui en délimite le contour dans l'image numérique d'origine *Img*. Dans le cas contraire, le processus d'extraction d'objets proprement dit, conforme à la seconde phase du procédé, est terminé.

A titre d'alternative, on peut prévoir, en fin de la première phase, une étape manuelle consistant à sélectionner, par exemple après affichage sur un écran informatique, l'une des zones significatives, $Z_1$ à $Z_4$, ou plus simplement l'une des boîtes $B_1$ à $B_4$, à l'aide d'un organe de pointage, du type "souris" ou autre, en cliquant sur une de ces boîtes. Selon cette variante, seul l'objet englobé dans la boîte sélectionnée est extrait, en laissant se dérouler les trois étapes de la seconde phase de façon entièrement automatique.

Selon le mode de réalisation préféré du procédé selon l'invention qui vient d'être décrit de façon détaillée, il est procédé à deux phases successives : localisation de contour d'objet et extraction. Cependant, comme il a été également indiqué dans le préambule de la présente description, selon un autre mode de réalisation, la phase de localisation peut être omise.

Tout d'abord, si l'on sait, *a priori,* que l'image numérique ne comporte qu'un seul objet à extraire, la première phase peut être omise sans difficultés particulières. Dans ce cas, c'est le cadre de l'image numérique *Img* elle-même qui peut servir de boîte de sélection. Les coordonnées du contour recherché sont déterminées à partir des côtés de l'image numérique *Img.*

Si l'image numérique *Img* comporte plusieurs objets distincts, les étapes de la première phase étant omises, il n'est pas possible de les discriminer automatiquement. Il est alors nécessaire de définir "à la main" une boîte de sélection entourant chaque objet à extraire. Pour ce faire, l'image *Img* peut être affichée sur un écran. Un opérateur visualise les objets et définit une ou plusieurs boîtes englobant, chacune, un des objets qu'il désire extraire. En effet, il n'est pas nécessaire que tous les objets soient entourés par une boîte de sélection si l'opérateur précité n'est intéressé que par une partie des objets affichés. La méthode opératoire est simple.

Une boîte de sélection peut être définie par une interface dite "Homme-Machine" ("IHM") et affichée sur un écran informatique. L'opérateur dispose d'un clavier et d'un organe de pointage, par exemple de type souris, comprenant avantageusement deux boutons de fonction, que l'on appellera droit et gauche. L'opérateur demande à l'interface d'afficher, en surimpression de l'image à traiter *Img*, un polygone rectangle de taille standard prédéterminée sur un écran informatique. Cette demande peut être effectuée à l'aide d'un menu, d'un raccourci clavier ou encore en cliquant sur une icône d'une boite d'outils également affichée sur l'écran.

En cliquant à l'intérieur du rectangle de sélection standard, à l'aide du bouton gauche de la souris, et en maintenant ce bouton enfoncé, l'opérateur peut déplacer le polygone rectangle de sélection sur la surface de l'écran. Le rectangle est effacé de la position originelle et est réaffiché à la dernière position atteinte.

En cliquant à l'intérieur du rectangle de sélection à l'aide du bouton droit (généralement affecté à des fonctions dites contextuelles), et en maintenant ce bouton enfoncé, l'opérateur peut modifier la longueur et la hauteur du polygone rectangle. Le fait de relâcher le bouton droit lance les étapes de la phase d'extraction d'objets. Celles-ci s'exécutent alors automatiquement, comme dans le cas du mode de réalisation préféré, et il est inutile de les redécrire. Dans une autre variante, les deux opérations, modification et lancement de la phase d'extraction, sont combinées. Le polygone résultat de la phase d'extraction peut être mémorisé et éventuellement affiché sur l'écran. Il est aussi tout à fait possible de définir plusieurs polygones de sélection sur l'écran. Les étapes de la phase d'extraction sont alors exécutées pour chaque polygone de sélection de manière séquentielle.

Jusqu'à présent, on a admis, du moins implicitement, que les images numériques *Img* à traiter étaient statiques. Le procédé est cependant tout à fait compatible avec le traitement d'images numériques dynamiques, c'est-à-dire d'images composant une séquence vidéo. Il suffit que le système de mise en oeuvre du procédé qui va être décrit ci-après soit suffisamment rapide pour effectuer notamment les acquisitions successives et la localisation et/ou l'extraction des objets contenus dans chacune des images qui lui sont présentées, ainsi que les mémorisations de données intermédiaires et finales. Outre les attributs associés aux différents objets d'une même image *Img*, on peut leur adjoindre un attribut supplémentaire permettant d'identifier la ou les images de la séquence vidéo précitée dans lesquels ils sont présents.

Dans une variante supplémentaire, il peut être procédé à une phase supplémentaire comprenant une étape de comparaison des objets successivement acquis, suivie d'une étape d'élimination des objets se répétant à l'identique dans différentes images de la séquence vidéo, adjacentes ou non. On peut naturellement tenir compte d'éventuelles modifications d'images par simple homothétie ou de variations de différents autres paramètres (luminosité, etc.) inférieures à un seuil prédéterminé. Cette disposition évite des redondances, notamment permet de n'enregistrer qu'une seule fois l'essentiel des données relatives à un objet extrait.

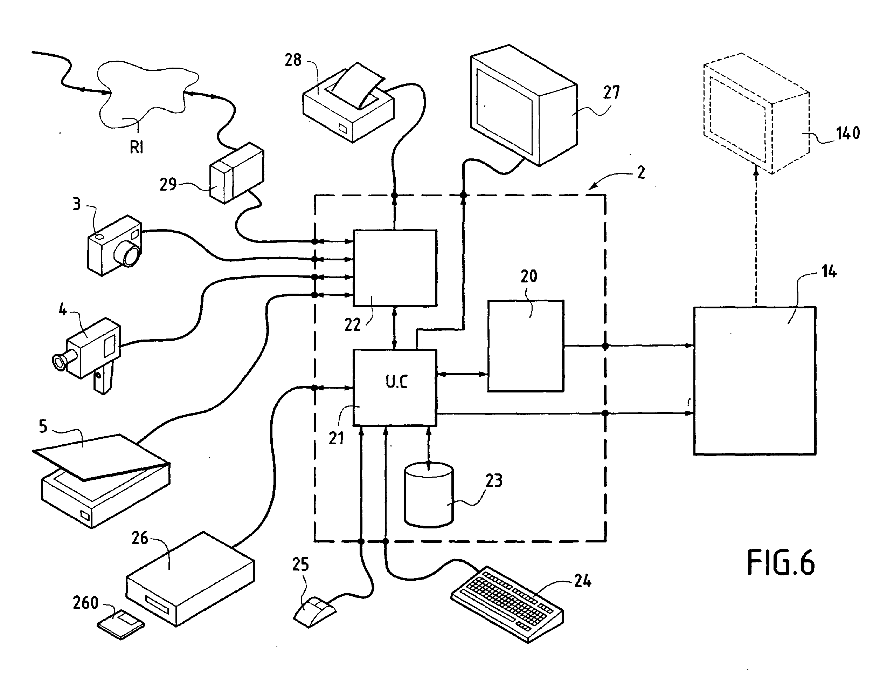

On va maintenant décrire un système de localisation et/ou d'extraction automatique d'objets dans une image numérique, mettant en oeuvre le procédé selon l'invention, par référence aux figures 5 et 6.

La figure 5 illustre schématiquement une chaîne complète 1 de traitement et d'exploitation numérique d'images. Elle comprend un dispositif 10 d'acquisition d'une ou plusieurs images analogiques, dont la sortie alimente un convertisseur analogique-numérique 11.

A titre d'exemple, la source d'images analogiques peut être constituée par une caméra vidéo conventionnelle. Ces deux premiers dispositifs peuvent être omis si l'on dispose d'une ou plusieurs sources générant directement des images sous forme numérique : caméra et appareils photographique numériques, scanner, etc. Les sorties du convertisseur analogique-numérique 11 et/ou des appareils précités, sources d'images numériques, alimentent un dispositif de stockage d'images numériques 12. Ce dernier présente ces images numériques en entrée du système de localisation et/ou d'extraction d'objets dans une image numérique 13 selon l'invention.

Enfin, une fois extraits de l'image numérique présentée en entrée du système 13, le ou les objets numériques sont transmis à un ou plusieurs dispositifs d'exploitation 14, en vue d'un archivage, de la réalisation de trucages ou d'effets spéciaux, etc., selon les applications visées.

La figure 6 illustre de façon plus détaillée un exemple de réalisation du système de localisation et/ou d'extraction d'objets dans une image numérique, système que l'on a référencé 2.

Le système 2 comprend un organe de localisation et/ou d'extraction automatique d'objets proprement dit 20, implémentant le procédé selon l'invention. Dans l'exemple décrit sur la figure 6, l'organe 20 est sous la commande de circuits de traitement de l'information à programme enregistré 21. De façon classique en soi, ces circuits 21, appelés "Unité Centrale ", ou "U.C.", sont avantageusement réalisés à base d'un microprocesseur, associé à divers circuits également classiques (non représentés): mémoire morte pour l'enregistrement du système d'exploitation et diverses routines et microprogrammes, mémoires vives pour l'enregistrement temporaire de données et de programmes, mémoires tampons (ou "buffers" selon la terminologie anglo-saxonne), etc. L'unité centrale 21 est également reliée à une mémoire de masse (disque dur) 23, pour l'enregistrement à plus longue échéance de données et/ou programmes, à des organes d'entrée et de saisie de données et/ou d'instructions de programme, tels un clavier 24, des organes de pointage (par exemple une souris 25) et diverses unités d'enregistrement/lecture, internes et/ou externes, représentés sous la référence unique 26 (lecteur/enregistreur de disquette ou de bande magnétique, lecteur de CédéRom, etc.), ainsi que des organes de sortie, tels un écran de visualisation 27 (via une carte graphique non représentée), une imprimante 28 (via les circuits d'entrée-sortie 22), ou encore une table traçante (non représentée).

Le système 2 comprend enfin des circuits d'entrée-sortie 22, placés sous la commande de l'unité centrale 21, pouvant comporter notamment une carte d'entrée-sortie (non représentée), munie de divers ports de types série, parallèle, "SCSI" (pour "Small Computer System Interface"), "USB" (pour "Universal Serial Bus"), etc., d'une carte d'acquisition d'images numériques et/ou une carte de conversion analogique-numérique, si besoin est. Cette dernière carte joue le rôle des circuits 11 de la figure 5.

Les circuits d'entrée-sortie 22 sont destinés à acquérir, ou pour le moins recevoir, les signaux représentant la ou les images numériques contenant des objets numériques à localiser et/ou à extraire automatiquement. Ils reçoivent en entrée une ou plusieurs sources d'images, et notamment, dans l'exemple décrit sur la figure 6, les sorties d'un appareil photographique numérique 3, d'une caméra vidéo 4, analogique ou numérique, et d'un scanner 5. On prévoit également que les images numériques puissent être transmises par un réseau local (non représenté) ou éloigné, via une ligne téléphonique, de type commuté ou de type numérique ("RNIS"), et un modem 29. Il peut s'agir notamment d'images provenant de sites Internet, transmises via le réseau Internet *RI,* comme le suggère la figure 6.

On doit comprendre que les images numériques peuvent être également entrées dans le système 2 par l'intermédiaire de supports (tels que disquettes 260, CédéRom, bandes magnétiques) sur lesquels elles ont été préalablement enregistrées, sous un format approprié ("JPEG", "BMP", "TIF", etc.).

Quelle qu'en soit la source, une fois acquises, et éventuellement converties en un format compatible avec le système 2, la ou les images numériques sont présentées à l'unité centrale 21 pour y être stockées provisoirement dans sa mémoire vive (non représentée). Les signaux numériques correspondants peuvent être également stockés sur le disque dur 23, en vue d'un usage ultérieur. L'organe de visualisation 27 peut enfin afficher l'image en cours de traitement.

Sous la conduite d'un opérateur (non représenté), entrant des instructions par l'intermédiaire du clavier 24 et/ou de la souris 25, et sous la commande de programmes enregistrés, les signaux associés à une image numérique à traiter sont ensuite transmis à l'organe de localisation et/ou d'extraction d'objets 20, sous la commande de l'unité centrale 21. Les signaux numériques servant d'entrée au procédé selon l'invention, tel qu'il a été décrit en regard des figures1A à 4D, proviennent directement de l'unité centrale 21 (où ils sont stockés dans sa mémoire vive) ou transitent par celle-ci en provenance du disque dur 23.

L'organe 20 de localisation et/ou d'extraction d'objets dans une image numérique peut se présenter sous diverses configurations. Il peut être d'un type entièrement câblé pour obtenir une rapidité maximale, c'est-à-dire se présenter sous la forme d'un automate recevant en entrée l'image à traiter et délivrant en sortie des signaux numériques représentatifs du ou des objet(s) extrait(s), signaux transmis à l'unité centrale 21, par exemple pour un stockage dans l'unité de disque dur 23, et/ou directement à un dispositif d'exploitation 14. L'inconvénient d'une telle solution est une grande rigidité du système.

Dans une autre variante, seules des routines répétitives sont câblées, ou plus précisément enregistrées dans des mémoires à lecture seule ("ROM" ou "Read Only Memory"), éventuellement reprogrammables ("PROM" ou "Programmable Read Only Memory", quel qu'en soit le type : "EPROM", "EEPROM", etc.).

Les diverses étapes du procédé selon l'invention se déroulent sous la commande combinée des instructions reçues de l'unité centrale 21, c'est-à-dire celles d'un programme chargé en mémoire vive, d'instructions et de paramétrage entrés par l'opérateur et des micro-instructions des routines précitées. Le programme précité peut à être chargé initialement ou mis à jour à l'aide d'un support tel qu'une disquette 260 (ou un CédéRom, etc.), lu par l'unité 26, ou encore transmis par des moyens télématiques (non représentés), voire par téléchargement à partir du réseau Internet *RI*.

On peut également prévoir, dans les circuits de localisation et d'extraction d'objets 20, un processeur rapide, spécialisé dans le traitement de signaux numériques ("signal processor" selon la terminologie anglo-saxonne), ou co-processeur, présentant avantageusement une architecture dite "RISC" ("Reduced Instruction Set Computer" ou processeur à jeu d'instructions réduit). Ce processeur supplémentaire décharge le processeur principal, c'est-à-dire celui de l'unité centrale 21, des instructions plus spécifiques au procédé de l'invention. Il s'agit des instructions ou pas de programme nécessaires à l'obtention des différentes phases et étapes du procédé : segmentation de l'image numérique, étiquetage de l'image, etc.

Dans tous les cas, l'organe de localisation et d'extraction d'objets 20 comprend notamment des circuits de mémorisation intermédiaire, tels des registres, des circuits d'horloge et des circuits d'interface, au moins avec l'unité centrale 21. De façon usuelle, les échanges s'effectuent par l'intermédiaire d'un bus système. Les circuits 20 peuvent également avoir un accès direct ("DMA", selon la terminologie anglo-saxonne) à la mémoire vive de l'unité centrale 21.

Dans une autre variante encore, les circuits de l'organe 20 peuvent être placés directement sur la carte graphique ou sur une carte "fille" associée à cette carte, le processeur graphique dont est muni une telle carte étant aussi utilisé pour les besoins spécifiques du procédé selon l'invention.

Les signaux numériques générés à chaque instant, lors des différentes étapes du procédé, peuvent être stockés soit provisoirement en local, c'est-à-dire dans l'organe 20, si celui-ci est doté d'une mémoire vive suffisante, soit transmis à l'unité centrale 21 pour un stockage dans sa propre mémoire vive et/ou sur le disque dur 23. Les différentes transformations de l'image numérique à traiter, ainsi que la progression de la localisation et de l'extraction des objets contenus dans celle-ci, peuvent être visualisées sur l'écran 27, dans une ou plusieurs fenêtres.

Bien que le processus, dans un mode de réalisation préféré de l'invention, puisse se dérouler de façon entièrement automatique, un opérateur peut cependant se voir offrir la possibilité d'intervenir à divers stades de ce processus. Il peut entrer, par exemple par l'intermédiaire du clavier 24 ou de la souris 25, des instructions et un paramétrage d'initialisation du système 2, lui indiquant notamment quelle est la source d'images (scanner 5, etc.), quel est le format des images à traiter, quel traitement préalable doit être réalisé (par exemple conversion analogique-numérique ou conversion de format), quel mode de réalisation du procédé est à mettre en oeuvre (localisation et extraction automatiques d'objets dans le mode préféré en conformité avec l'invention), préciser comment et où doivent être enregistrés les signaux numériques représentant les objets extraits, etc.

En cours de processus, l'opérateur peut également intervenir pour fixer certains paramètres, notamment pour délimiter manuellement des zones d'extraction (si seule cette phase doit être réalisée), pour sélectionner une partie des objets extraits de façon automatique, voire un seul des objets, quel sera ensuite l'exploitation qui sera faite des objets extraits, etc. Pour ce faire, des instructions peuvent également être transmises au dispositif d'exploitation 14, via l'unité centrale 21 et après saisie manuelle. Le dispositif 14 peut également être muni de commandes propres (non représentées), ainsi que d'un écran de visualisation 140 (écran de télévision, etc.), et de façon plus générale, de tous dispositifs qui lui sont nécessaires pour effectuer un post-traitement sur les objets numériques transmis par le système 2, accompagnés ou non des images numériques originales.

De façon avantageuse, pour saisir et entrer les instructions et/ou paramètres précités, l'opérateur peut disposer de menus déroulants ou similaires qui lui sont présentés sur l'écran 27, sous la commande de l'unité centrale 21. Il lui suffit alors de "cliquer" sur les options désirées, préalablement au déroulement des phases et étapes du procédé selon l'invention, au cours du processus de localisation et d'extraction d'objets, et/ou en fin de ce processus, notamment pour préciser la destination et la nature du post-traitement à réaliser sur les objets extraits.

Si le système n'est pas connecté directement au dispositif d'exploitation 14, les données relatives aux objets peuvent être enregistrées pour un traitement ultérieur, tout d'abord en local, sur le disque dur 23, mais aussi sur divers supports : disquette 260 (ou bande magnétique, CédéRom, etc.). Elles peuvent ensuite être transmises et utilisées en différé, avantageusement avec les données correspondant à l'image numérique originale *Img*. Ces mêmes données peuvent être aussi transmises par tout moyen télématique, voire par le réseau Internet *RI*, et être stockées dans un lieu distant ou être utilisées en temps quasi-réel en ce lieu.

Les moyens d'impression 2, ou similaires (table traçante, etc.) peuvent aussi être utilisés pour obtenir une représentation graphique des objets extraits, ainsi éventuellement que pour effectuer le listage des données associées.

Dans une autre variante de réalisation, le système de localisation et/ou d'extraction d'objets dans une image numérique *Img* peut être intégré dans le dispositif d'exploitation 14 et fonctionner en autonomie complète, sans aucune intervention extérieure, à l'exception du chargement initial d'un programme (qui peut d'ailleurs être résident en mémoire morte) et d'un paramètrage particulier. A titre d'exemples, la chaîne de traitement d'image complète de la figure **???** pourrait se résumer à une caméra vidéo numérique (figure 6 : 4) et le dispositif d'exploitation 14 pourrait être muni d'un écran de visualisation propre 140. Le dispositif 14 incorpore le système 2 et reçoit les images vidéo produites par la caméra. Le dispositif 14 est programmé pour produire un post-traitement fixe sur les objets extraits et l'image finale est affichée sur l'écran 140.

A la lecture de ce qui précède, on constate aisément que l'invention atteint bien les buts qu'elle s'est fixés.

Le procédé et le système de mise en oeuvre du procédé selon l'invention permettent bien, dans un mode de réalisation préféré, un traitement entièrement automatique d'une image numérique en vue d'extraire tous les objets numériques contenus dans l'image numérique précitée, c'est-à-dire sans intervention extérieure, ce quelle que soit la nature du fond (arrière-plan). Ce dernier n'a plus besoin notamment d'être uniforme. L'objet détecté et/ou extrait l'est de façon très précise (au pixel près, sous la forme de polygones), et rapidement, ce même si l'arrière-plan précité est bruité.

Il doit être clair cependant que l'invention n'est pas limitée aux seuls exemples de réalisation explicitement décrits, notamment en relation avec les figures 1A à 6. En particulier, les boîtes englobant les régions significatives pourraient différer de la forme rectangulaire, bien que cette dernière soit particulièrement adaptée pour servir d'axes de référence et pour déterminer les coordonnées des points englobés.

Il doit être clair aussi que, bien que particulièrement adaptée à des applications du type des trucages, on ne saurait cantonner l'invention à ce seul type d'applications. Elle s'applique à chaque fois que l'on désire extraire automatiquement un objet d'une image numérique.

## Revendications

1. Procédé de traitement d'une image numérique (*Img*) en vue d'en extraire des objets numériques constitués par des régions de pixels à caractéristiques optiques homogènes, lesdites régions ayant un contour fermé, **caractérisé en ce qu'**il comprend :

   - une phase de localisation d'au moins un desdits objets numériques ($Z_1$-$Z_4$), comprenant au moins une étape de création dans ladite image numérique d'une aire fermée ($B_1$-$B_4$) englobant cet objet numérique ($Z_1$-$Z_4$), les coordonnées des pixels la composant étant déterminées par rapport à un référentiel déterminé lié à ladite aire fermée ($B_1$-$B_4$) ; et

   - une phase d'extraction automatisée d'au moins un objet numérique ($Z_1$-$Z_4$) comprenant les étapes suivantes :

      a/ l'acquisition d'un jeu de vecteurs d'interception avec ledit contour de l'objet ($Z_1$-$Z_4$) représentant chacun une coordonnée d'un point de ce contour par rapport audit référentiel, l'interception étant déterminée par la fixation préalable d'un paramètre formant seuil caractérisant ladite homogénéité et la détection de la variation de ce paramètre au delà de ce seuil ;

      b/ l'acquisition, à partir de ce jeu de vecteurs d'interception, des coordonnées, par rapport audit référentiel, des points décrivant un premier contour ($Co_p$), de l'objet numérique ($Z_1$-$Z_4$), dit primaire ;

      c/ la reconstruction, à partir de ce contour dit primaire ($Co_p$), d'un second contour représentant le contour réel ($Co_r$) dudit objet à extraire, par élimination de bruits parasites et lissage dudit contour primaire ($Co_p$).

2. Procédé selon la revendication 1, **caractérisé en ce que** ladite image numérique (*Img*) comprend au moins un canal de couleur, lesdites caractéristiques optiques homogènes des pixels sont déterminées en testant, pour chacun desdits canaux, si la relation suivante est vérifiée pour tous les pixels :

$$|I(P(n)) - I(P(n+1))| < \delta,$$

où $\delta$ est ledit seuil et $I(P(n))$ et $I(P(n+1))$ sont les intensités lumineuses de pixels $P(n)$ et $P(n+1)$ adjacents voisins, de rangs $n$ et $n+1$ respectivement, $n$ étant un nombre entier arbitraire.

3.  Procédé selon la revendication 2, **caractérisé en ce que** ladite phase de localisation d'objets ($Z_1$-$Z_4$) est également automatisée et comprend les étapes suivantes :

-   la segmentation de ladite image numérique (*Img*) en régions ($R_i(NE)$) constituées de pixels adjacents à caractéristiques optiques homogènes, ladite homogénéité étant déterminée par la fixation préalable d'un paramètre dit d'homogénéité et la détection de la variation d'un pixel à l'autre de ce paramètre inférieure à un second seuil prédéterminé ;

-   la détermination pour chacun desdits canaux d'une plage de couleur en retenant la valeur maximale et la valeur minimale desdites intensités lumineuses, ladite plage étant définie par la relation : intervalle [minimum ; maximum] ;

-   l'étiquetage desdites régions homogènes à l'aide d'un attribut représentant les états suivants : état initial dit *"Non Etiqueté"*, état dit *"Non Significatif"* pour les régions ($R_x(NS)$) n'appartenant pas audit objet, et état dit *"Significatif"* pour les régions ($R_z(S)$) appartenant audit objet, l'étiquetage s'effectuant par l'initialisation de toutes les régions situées en bordure de ladite image numérique (*Img*) audit état *"Non Significatif"*, et, par balayage de toutes lesdites régions homogènes, l'attribution progressive d'un desdits états, *"Significatif"* ou *"Non Significatif"*, en testant l'interception desdites plages de couleur de deux régions adjacentes et l'attribution à la région adjacente suivante de l'état de la région précédente si le test est positif et de l'état contraire si le test est négatif ;

-   la fusion des régions voisines, associées audit attribut d'état *"Significatif"*, pour former des régions correspondant auxdits objets numériques à extraire ($Z_1$-$Z_4$) ;

-   et ladite étape de création d'aires fermées ($B_1$-$B_4$) englobant les objets numériques ($Z_1$-$Z_4$).

4.  Procédé selon la revendication 3, **caractérisé en ce que** ledit balayage est effectué en suivant un parcours en spirale (T) parallèlement aux bords de ladite image *(Img),* débutant par lesdites régions homogènes ($R_m(NS)$), initialisées audit état *"Non Significatif"* et situées sur les bords, et se terminant vers le centre de ladite image (*Img*).

5.  Procédé selon les revendications 3 ou 4, **caractérisé en ce que** lesdites aires fermées ($B_1$-$B_4$) englobant lesdits objets numériques ($Z_j$) sont délimitées, chacune, par un rectangle, dont les côtés verticaux et horizontaux constituent ledit référentiel, **en ce que** ladite étape d'acquisition d'un jeu de vecteurs d'interception consiste, pour chacune desdites aires ($B_j$), à analyser les pixels successifs les composant, à partir des quatre côtés dudit rectangle et sur des parcours (*lancer 1 - lancer 4*) parallèles à ces côtés, jusqu'à interception avec ledit contour de l'objet numérique englobé ($Z_j$), de manière à déterminer un jeu de quatre vecteurs représentant les coordonnées des points dudit contour par rapport à chacun des côtés dudit rectangle, et **en ce que** lesdites interceptions sont effectives lorsque la relation suivante est vérifiée, pour un nombre $N$ prédéterminé de pixels consécutifs sur chacun desdits quatre parcours (*lancer 1 - lancer 4*) :

$$|I(P(n)) - I(P(n+1))| > \delta,$$

avec $\delta$ étant ledit second seuil prédéterminé, $I(P(n))$ et $I(P(n+1))$ étant les intensités lumineuses de pixels $P(n)$ et $P(n+1)$ adjacents voisins, de rang $n$ et $n+1$ respectivement, et $n$ et $N$ étant des nombres entiers arbitraires.

6.  Procédé selon la revendication 5, **caractérisé en ce que** la détermination desdites aires fermées ($B_1$-$B_4$) délimitées, chacune, par un rectangle, comprend les opérations suivantes, réalisées à l'aide d'un dispositif d'interface homme-machine comprenant au moins un écran (27), un clavier (24) et un organe de pointage (25), du type souris, muni d'au moins deux boutons de fonction :

- l'affichage sur ledit écran, en surimpression de ladite image numérique (*Img*) d'un rectangle de dimensions standards, par actionnement dudit organe de pointage (25) ou par utilisation dudi clavier (24) ;

- sélection dudit rectangle en cliquant dessus par actionnement de l'un desdits boutons de fonction ;

- déplacement dudit rectangle sur la surface dudit écran (27), par maintien dudit premier bouton de fonction enfoncé et déplacement dudit organe de pointage (25) ;

- modification desdites dimensions standards en cliquant à l'intérieur dudit rectangle déplacé, à l'aide d'un deuxième bouton de fonction, de manière à englober ledit objet numérique (*Zj*) ; et

- et lancement de ladite phase d'extraction automatique, par relâchement dudit deuxième bouton de fonction.

**7.** Procédé selon la revendication 5, **caractérisé en ce que** l'étape de construction dudit contour primaire ($Co_p$) consiste à comparer lesdits vecteurs deux à deux, suivant chacune desdites directions verticale et horizontale, de manière à obtenir les abscisses et ordonnées de chacun des points dudit contour primaire ($Co_p$) par rapport auxdits côtés verticaux et horizontaux dudit rectangle, et à enregistrer les coordonnées de tous les points ainsi déterminés.

**8.** Procédé selon la revendication 7, **caractérisé en ce que** ladite étape de reconstruction du contour réel ($Co_r$) à partir des coordonnées enregistrées des points dudit contour primaire ($Co_p$) consiste à effectuer les opérations de correction suivantes :

- la suppression des recouvrements dudit contour primaire ($Co_p$) suivant lesdites directions verticale ou horizontale ;

- et le lissage de la courbe représentée par l'ensemble des points dudit contour primaire ($Co_p$) en détectant des discontinuités de ladite courbe et en les éliminant ;

et **en ce que** les nouvelles coordonnées obtenues pour les points dudit contour corrigé, constituant ledit contour réel ($Co_r$), sont enregistrées.

**9.** Procédé selon la revendication 8, **caractérisé en ce que** ladite la suppression des recouvrements dudit contour primaire ($Co_p$) comprend les opérations suivantes :

- la détection de points d'intersections (*I*, *J*) entre des paires de segments de droites formant ledit contour primaire ($Co_p$) ;

- la détermination, pour chacun desdits segments de droite d'un degré de continuité par rapport aux segments de droite qui l'entoure, détermination du segment de droite présentant le degré de continuité le plus faible ;

- calcul des projetés (*H*(3), *H*(4)) des points d'extrémité de ce segment de droite sur l'autre segment de ladite paire, détermination du plus faible projeté et élimination du point d'extrémité correspondant ; et

- et connexion directe du point d'extrémité subsistant (*Pb*(4)) au point suivant (*Pb*(6)) du contour

**10.** Procédé selon la revendication 9, **caractérisé en ce que** ledit lissage de courbe comprend les opérations suivantes :

- la sélection de trois paramètres d'entrée déterminés, dits hauteur *H,* longueur *L* et éloignement *E*, exprimant des distances en pixels ;

- le suivi pas à pas dudit contour primaire, en sélectionnant, à chaque pas, trois points consécutifs (*P*2, *P*3, *P*4), extrémités de deux segments également consécutifs ;

- le calcul de la longueur 1 et de la hauteur h d'une boîte rectangulaire englobant lesdits trois points (*P*2, *P*3, *P*4) et comparaison avec les longueur *L* et hauteur *H* déterminés;

- le marquage du point intermédiaire (*P*3) desdits trois points consécutifs selon l'un des deux états suivants et l'enregistrement de cet état :

    a/ invalide, si l>L et/ou h>H,

    b/ valide, dans le cas contraire ;

- le calcul de l'éloignement e en pixels de deux points invalides consécutifs (*P'*4, *P'5*) et l'élimination de ces points et des points intermédiaires valides si la relation suivante est vérifiée : e>E ; et

- interconnexion directe des points amont (*P'*4) et aval (*P'*11) dudit contour primaire.

11. Système pour la mise en oeuvre du procédé selon l'une quelconque des revendications précédentes, **caractérisé en ce qu'**il comprend des circuits d'entrée-sortie (22) connectés à au moins une source d'image numérique (3-5, 29), des moyens de commande et traitement de données à programme enregistré (21), recevant des signaux représentant ladite image numérique acquise par lesdits circuits d'entrée-sortie (22), des moyens de mémorisation (23) pour la lecture et l'enregistrement permanent de données numériques, notamment des données correspondant auxdits objets extraits, et des moyens de saisie de données (24, 25), connectés auxdits moyens de commande et de traitement de données numériques (21), des moyens de visualisation (27) et des moyens de traitement de données spécialisés (20), coopérant avec lesdits moyens de commande et de traitement de données numériques (21), effectuant lesdites phases de localisation et/ou d'extraction d'objets.

12. Système selon la revendication 11, **caractérisé en ce que** ladite source d'image numérique comprend un appareil photographique numérique (3) et/ou une caméra numérique (4).

Ri(NE)          Img

Régions non étiquetées

FIG.1A

Rm(NS)    Rn(NE)    Img

Régions non étiquetées

Régions non significatives

FIG.1B

Rm(NS)    Img    Rn(NE)

T

Régions non étiquetées

Régions non significatives

FIG.1C

Ry(NS)    Rx(NE)    Img    Rz(S)

Régions non étiquetées

Régions non significatives

Régions significatives

FIG.1E

Rp(NS)    Img    Rq(S)

Régions non significatives

Régions significatives

## FIG.1F

Rp(NS)    Z1    Img    Z3

Z2    Z4

Régions non significatives

Régions fusionnées significatives

## FIG.1G

Rp(NS)    Img

B3

Z1

Z3

B1

B4

Z4

## FIG.1H

Z2

B2

Régions non significatives

Régions fusionnées significatives

FIG.2A

FIG.2B

lancer 1

lancer 2

FIG.3A

lancer 4

Zj

lancer 3

Rp(NS)

Bj

FIG.3B

$l_2$

$l_1$

$l_3$

$l_4$

X

0

C

S

$X_B$

$X_j$

FIG.5

1

13

IMAGE ANALOGIQUE

CONVERTISSEUR ANALOGIQUE EN NUMERIQUE

IMAGE NUMERIQUE

SYSTEME D'EXTRACTION AUTOMATIQUE D'OBJETS NUMERIQUES

EXPLOITATION DES OBJETS NUMERIQUES

10

11

12

14

FIG.4A

FIG.4C

FIG.4B

FIG.4D

FIG.4F

FIG.4E

FIG.4H

FIG.4G

FIG.4I

FIG.6

Office européen
des brevets

**RAPPORT DE RECHERCHE EUROPEENNE**

Numéro de la demande

EP 00 40 0879

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | US 5 815 596 A (TABB MARK D ET AL) 29 septembre 1998 (1998-09-29) * abrégé * * colonne 10, ligne 25 – ligne 56 * | 1-12 | G06T5/00 |
| A | KISE K ET AL: "SEGMENTATION OF PAGE IMAGES USING THE AREA VORONOI DIAGRAM" COMPUTER VISION AND IMAGE UNDERSTANDING,US,ACADEMIC PRESS, vol. 70, no. 3, juin 1998 (1998-06), pages 370-382, XP000826278 ISSN: 1077-3142 * abrégé * * page 373, alinéa 4 * | 1-12 | |
| A | CHASSERY J M ET AL: "DIAGRAMME DE VORONOI APPLIQUE A LA SEGMENTATION D'IMAGES ET A LA DETECTION D'EVENEMENTS EN IMAGERIE MULTI-SOURCES" TRAITEMENT DU SIGNAL,FR,CENTRALE DES REVUES, MONTROUGE, vol. 8, no. 3, 1991, pages 155-164, XP000309612 ISSN: 0765-0019 * abrégé * * page 158, alinéa 3.2 – page 159, alinéa 3.6 * | 1-12 | **DOMAINES TECHNIQUES RECHERCHES (Int.Cl.7)** G06T |

Le présent rapport a été établi pour toutes les revendications

| Lieu de la recherche | Date d'achèvement de la recherche | Examinateur |
|---|---|---|
| LA HAYE | 21 novembre 2000 | Gonzalez Ordonez, O |

CATEGORIE DES DOCUMENTS CITES

X : particulièrement pertinent à lui seul
Y : particulièrement pertinent en combinaison avec un autre document de la même catégorie
A : arrière–plan technologique
O : divulgation non–écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 00 40 0879

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

21-11-2000

| Document brevet cité au rapport de recherche | Date de publication | Membre(s) de la famille de brevet(s) | Date de publication |
|---|---|---|---|
| US 5815596 A | 29-09-1998 | AUCUN | |

EPO FORM P0460

Pour tout renseignement concernant cette annexe : voir Journal Officiel de l'Office européen des brevets, No.12/82